# NOUVEAU FASCICULE DE BREVET EUROPEEN

(11) **EP 0 815 630 B2**
(45) Date de publication et mention de la décision concernant l'opposition: **20.03.2002**
(45) Mention de la délivrance du brevet: 23.12.1998
(21) Numéro de dépôt: 96905919.5
(22) Date de dépôt: 06.03.1996
(51) Int. Cl.: H02H 3/33, H01H 83/04

(54) **APPAREIL ELECTRIQUE DE PROTECTION DIFFERENTIELLE A CIRCUIT TEST**
ELEKTRISCHE DIFFERENTIALSCHUTZVORRICHTUNG MIT PRÜFKREIS
ELECTRICAL DIFFERENTIAL PROTECTION APPARATUS WITH A TEST CIRCUIT

(30) Priorité: 16.03.1995 FR 9503297
(43) Date de publication de la demande: 07.01.1998
(73) Titulaire: Schneider Electric Industries SA, 92500 Rueil-Malmaison (FR)
(72) Inventeur: BONNIAU, Michel, F-71640 Dracy-le-Fort (FR); PAUPERT, Marc, F-71100 Chalon-sur-Saône (FR)
(74) Mandataire: Ritzenthaler, Jacques
(86) Numéro de dépôt international: FR9600350
(87) Numéro de publication internationale: WO9628872

(56) Documents cités:
- EP-A- 0 264 313
- EP-A- 0 367 690
- EP-A- 0 502 393
- EP-A- 0 590 545
- EP-B- 0 220 408
- DE-A- 4 306 231
- US-A- 3 787 708

## Description

La présente invention concerne un appareil électrique de protection différentielle, notamment un disjoncteur ou un interrupteur, comportant un déclencheur du genre comprenant un transformateur de détection d'un courant différentiel, un relais de déclenchement d'un mécanisme tel le mécanisme de coupure du disjoncteur, et un circuit test de contrôle du fonctionnement du déclencheur, ledit relais comportant une culasse fixe portant une bobine, et une palette ou analogue mobile par rapport à la culasse, le relais et le transformateur étant reliés électriquement de façon que pendant le fonctionnement normal de l'appareil, la palette soit maintenue en position accolée sur la culasse fixe et que lorsqu'un courant différentiel est détecté par le noyau du transformateur, la palette actionne le mécanisme de coupure précité.

Les déclencheurs différentiels sont des appareils qui sont conçus à partir de relais présentant une grande sensibilité. Sous certaines conditions climatiques, l'élément mobile, à savoir la palette, peut se coller à l'élément fixe et empêcher le fonctionnement de la protection différentielle. En outre, ces appareils, de par leur nature, restent enclenchés en permanence afin d'assurer la continuité de service et ne sont que très rarement manoeuvrés. C'est pourquoi, ils sont souvent pourvus d'un circuit test qu'un vérificateur peut manoeuvrer localement ou bien à distance, afin de s'assurer du bon fonctionnement de la protection.

On connaît des appareils électriques de protection différentielle du genre précédemment mentionné, tels que décrits dans les documents FR-2.638.909 ou EP-264.313, dans lesquels le circuit test est agencé en circuit dérivé de fuite connecté entre deux points de raccordement des conducteurs actifs du réseau, respectivement en amont et en aval du transformateur et comportant principalement une paire de résistances d'essai, un bouton test du type poussoir et un interrupteur de protection. La fermeture manuelle du bouton test simule un courant différentiel par insertion des résistances dans le circuit test, lequel courant est détecté par le transformateur qui engendre le déclenchement différentiel par le relais, provoquant l'ouverture automatique des contacts du dispositif de coupure. Le déclenchement du relais provoque en outre l'ouverture automatique de l'interrupteur de protection pour la mise hors circuit du circuit test. Ce type d'appareil peut également comporter un circuit de déclenchement à distance dont la fermeture peut simuler un défaut d'isolement à distance.

Or, il s'avère que chaque mise en service du circuit test, localement ou à distance, engendre le déclenchement de l'appareil et interrompt de ce fait la continuité électrique. Cette continuité électrique, pour être rétablie, nécessite l'intervention d'un opérateur chargé de réenclencher l'appareil. Cependant, le document EP-A-502 393 décrit un moyen pour empêcher le déclenchement de l'appareil lors d'un test.

La présente invention résout ces problèmes et propose un appareil de protection différentielle à circuit test de conception simple, facilitant le travail du vérificateur tout en améliorant la fiabilité de la protection différentielle.

A cet effet la présente invention a pour objet un appareil électrique de protection différentielle du genre précédemment mentionné, selon la revendication 1.

Selon une réalisation particulière de l'invention, ce premier moyen consiste principalement en un moyen pour appliquer une tension sous forme de créneaux aux bornes de la bobine du relais.

Selon une caractéristique particulière de l'invention, l'amplitude et la largeur des créneaux sont réglés de manière à obtenir une vibration de la palette sans entraîner son ouverture complète.

Selon une caractéristique particulière, la tension appliquée est une tension carrée.

Selon une autre caractéristique, le second moyen précité est un moyen pour mesurer la variation de self aux bornes de la bobine, pendant la mise en service du premier moyen. une variation brutale de la self étant caractéristique du bon fonctionnement du relais.

Avantageusement, ce second moyen mesure lavariation du courant dans le circuit test, pendant la mise en service du premier moyen, une variaition brusque du courant étant caractéristique du bon fonctionnement du relais.

Selon une autre réalisation,ce second moyen est un moyen pour détecter la présence d'une surtension aux bornes de la bobine pendant la mise en service du premier moyen. cette surtension étant caractéristique de l'aptitude de la palette à se décoller de la culasse fixe.

Selon une autre caractéristique. il comporte un troisième moyen de signalisation, local ou déporté, relié électriquement au second moyen de détection précité de manière signaler une éventuelle défaillance de la protection différentielle.

Selon une autre caractéristique, les moyens précités sont mis en service périodiquement.

Selon une autre caractéristique les moyens précités sont mis en service automatiquement.

Avantageusement, la fréquence de mise en service des moyens précités va de quelques dizaines de millisecondes à plusieurs mois.

Mais d'autres avantages et caractéristiques de l'invention, apparaîtront mieux dans la description détaillée qui suit et se réfère aux dessinx annexés donnés uniquement à titre d'exemple et dans lequel :
La figure 1 représente le schéma électrique d'un appareil électrique de protection différentielle selon une réalisation particulière de l'invention.
La figure 2 représente une réalisation particulière du second moyen de l'invention, et,
La figure 2a représente la tension et le courant aux bornes de la bobine.

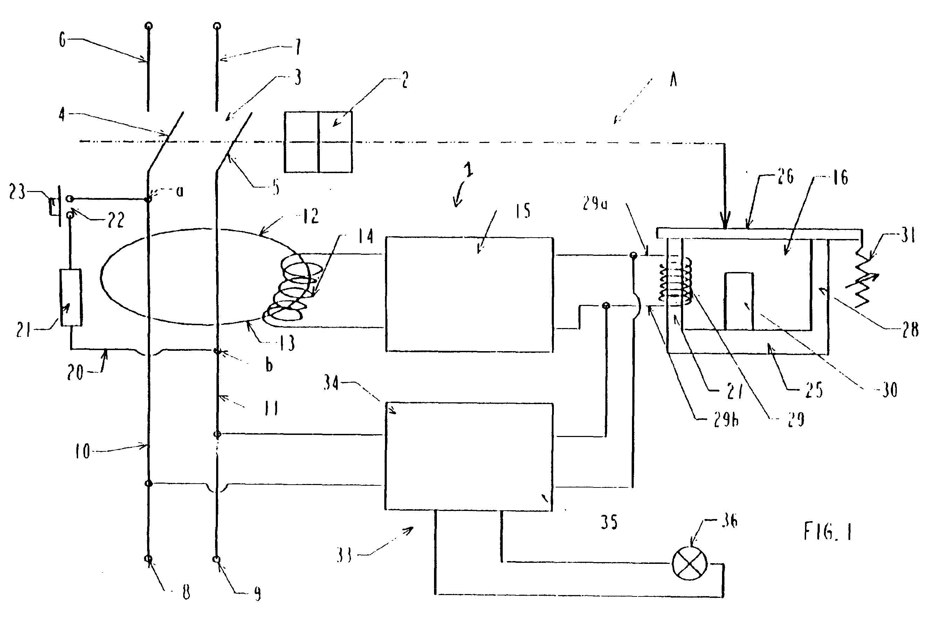

Sur la figure 1, on voit un appareil électrique de protection différentielle (A), notamment un disjoncteur ou un interrupteur de courant de fuite, lequel appareil (A) comporte un déclencheur différentiel 1 associé à un mécanisme de commande 2 d'un dispositif de coupure bipolaire 3 à contacts d'interruption 4, 5. L'appareil A est équipé d'une première paire de bornes principales 6, 7 de raccordement par exemple à la charge et d'une seconde paire de bornes principales 8, 9 de raccordement au réseau d'alimentation. Les premières bornes 6, 7 sont reliées électriquement aux secondes 8, 9 par un circuit interne de liaison à deux conducteurs actifs 10, 11 dans lesquels sont insérés les contacts 4, 5 du dispositif de coupure 3.

Le déclencheur différentiel 1 comporte un transformateur de sommation 12 et un relais de déclenchement 16, ledit transformateur 12 ayant un noyau 13 en forme de tore entourant les conducteurs actifs 10, 11 pour la détection d'un courant homopolaire. En fonction de la sensibilité de la protection différentielle, chaque conducteur 10, 11 traverse directement le transformateur 12, ou est enroulé sur le noyau 13 selon au moins une spire pour former un enroulement primaire. Le noyau 13 comprend un enroulement secondaire 14 de mesure du courant différentiel, raccordé électriquement par l'intermédiaire d'un circuit électronique de protection 15 au relais de déclenchement 16, du type électromagnétique. Le relais 16 coopère avec le mécanisme de commande précité 2, pour provoquer l'ouverture automatique des contacts 4, 5 lorsque l'intensité du courant de fuite détecté par le transformateur 12, dépasse le seuil de déclenchement différentiel de l'appareil.

Le déclencheur différentiel 1 pourra accessoirement être équipé d'un circuit test manuel classique 20 renfermant en série une résistance d'essai 21 et un interrupteur d'essai 22 à bouton test 23, ledit circuit 20 étant raccordé électriquement aux conducteurs actifs 10, 11 en deux points de raccordement a, b disposés de part et d'autre du noyau 13. Le point de raccordement a est situé du côté des premières bornes 6, 7, tandis que l'autre point b est situé du côté des secondes bornes précitées 8, 9.

On notera que ce déclencheur 1 pourra également être équipé d'un interrupteur de télécommande (non représenté) appartenant à un circuit de déclenchement à distance, branché en parallèle sur le circuit test manuel 20.

Le relais de déclenchement précité 16 comprend principalement une culasse fixe 25 en forme de U et une palette 26 d'actionnement du mécanisme 2 du disjoncteur. L'une 27 des branches 27, 28 de la culasse fixe 25 porte un bobinage 29, et la palette 26 est maintenue en position accolée sur la culasse fixe 25 à l'encontre d'un ressort de rappel 31 par l'intermédiaire d'un aimant permanent 30 intercalé entre les branches 27, 28 du U. De tels relais polarisés 16 sont bien connus et présentent l'avantage d'une faible puissance de déclenchement.

Conformément à une réalisation particulière de l'invention illustrée sur la figure 1, l'appareil électrique précité A comporte un circuit électronique de test automatique 33 raccordé électriquement en entrée, aux deux conducteurs actifs 10, 11, et en sortie, aux bornes 29a, 29b de la bobine 29 du relais 16. Ce circuit électronique 33 comprend un premier moyen 34 pour appliquer à la bobine 29 du relais 16 une tension sous forme de créneaux, l'amplitude et la largeur des créneaux étant réglés de manière à entraîner seulement une vibration de la palette 26 sans pour autant provoquer son ouverture complète, ceci afin d'éviter tout déclenchement du mécanisme 2. Les mouvements successifs d'ouverture et de fermeture de la palette 26 pendant cette vibration, engendreront une surtension aux bornes de la bobine 29. Le circuit 33 comporte donc un second moyen 35 pour détecter la présence ou bien l'absence d'une surtension aux bornes de ladite bobine 29. Ce second moyen 35 sera relié électriquement à un moyen de signalisation 36 destiné, lors de l'absence de cette surtension, à avertir du mauvais fonctionnement du relais 16 et de là. de la défectuosité de la protection.

On notera que ce circuit électronique de test 33, sera avantageusement conçu de manière à générer des signaux de forme appropriée et d'une fréquence allant de quelques dizaines de millisecondes à plusieurs mois. Ce circuit électronique 33 sera de préférence lui-même alimenté sous la tension du réseau, alors que le circuit de protection 15 pourra ou non dépendre de cette tension.

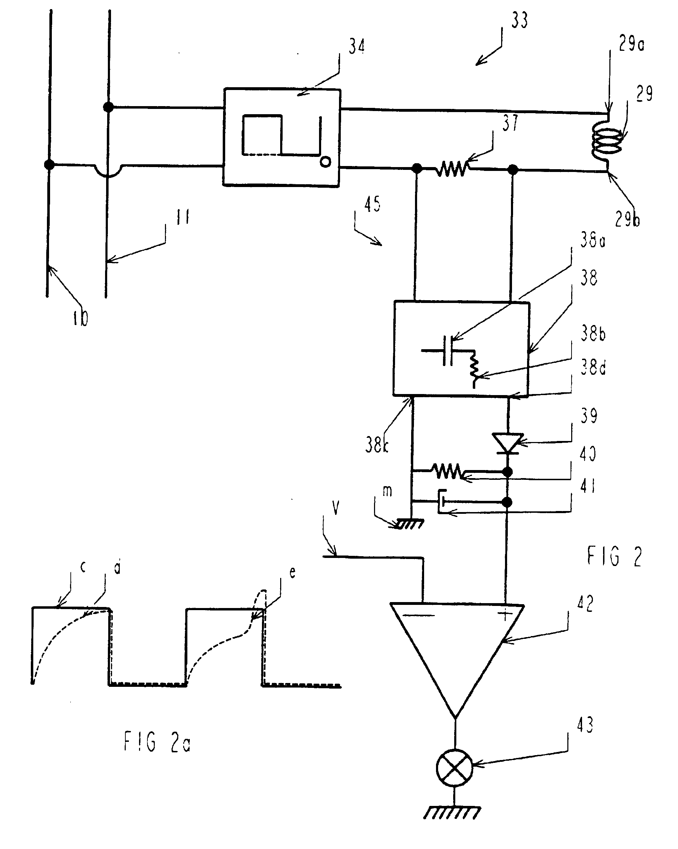

Selon une autre réalisation illustrée sur la figure 2, le circuit test 33 comporte un premier moyen 34 pour générer une tension sous forme de créneaux (en l'occurence une tension carrée) aux bornes de la bobine 29 du relais 16 et un second moyen 45 pour mesurer une variation de self aux bornes 29a,29b de la bobine 29. Ce second moyen 45 comporte: une résistance 37 montée en série avec la bobine 29 du relais, un circuit dérivateur 38 monté en entrée en parallèle aux bornes de la résistance 37, et constitué par un condensateur 38a et une résistance 38b montés en série. Le circuit dérivateur 38 est relié en sortie à l'entrée d'une diode 39, laquelle est reliée en sortie à un ensemble constitué d'un condensateur 40 et d'une capacité 41 montés en parallèle. L'une des bornes du condensateur 40 et de la capacité 41 est reliée à l'une 38c des sorties 38c et 38d du circuit dérivateur 38 et à la masse M, tandis que l'autre borne de ces éléments, reliée à la diode 39, est reliée au pôle positif d'un amplificateur opérationnel 42 dont le pôle négatif reçoit une tension de référence. La sortie de cette amplificateur 42 est reliée à une lampe 43.

Le fonctionnement de l'appareil selon l'invention va être décrit brièvement à travers ce qui suit en référence aux figures.

En fonctionnement normal d'égalité des courants dans les conducteurs actifs 10, 11, aucune tension n'est induite dans le secondaire 14 du transformateur 12 et la palette 26 est maintenue en position collée. Lors d'un déséquilibre entre les courants, en l'occurrence lors d'un défaut différentiel entre des courants alternatifs, un signal de défaut en forme de courant alternatif est engendré dans l'enroulement secondaire 14 et ce signal est appliqué par l'intermédiaire du circuit de protection 15, au bobinage 29 du relais 16. Ce relais 16. par l'intermédiaire de la palette 26, provoque le déclenchement en agissant sur le mécanisme 2 qui provoque l'ouverture des contacts 4, 5 du disjoncteur. Dans le cas où l'appareil A est équipé d'un circuit test manuel classique 20, lorsque l'opérateur souhaite s'assurer du bon fonctionnement du déclencheur 1, la fermeture locale de l'interrupteur d'essai 20 par le bouton test 23 (ou bien la fermeture de l'interrupteur de télécommande) engendre la création d'un courant différentiel artificiel entraînant l'ouverture des contacts 4, 5 du dispositif de coupure 3 après déclenchement différentiel par le relais 16 et le mécanisme 2. Ce déclenchement interrompt la continuité de service de l'appareil électrique A et nécessite l'intervention d'un vérificateur chargé du réenclenchement de l'appareil A de manière à rétablir cette continuité.

Au contraire, dans le cas où l'appareil électrique A est équipé d'un circuit test 33 conforme à la réalisation de l'invention décrite sur la figure 1, une tension en créneaux est appliquée périodiquement aux bornes 29a, 29b du bobinage 29 du relais 16. En cas de bon fonctionnement du relais, l'envoi de cette tension entraîne une vibration de la palette 26 sans provoquer son ouverture complète. Ce mouvement de vibration constitué de mouvements d'ouverture et de fermeture successifs engendre aux bornes 29a, 29b du bobinage 29 une surtension détectée par le moyen 35. La présence de cette surtension permet de confirmer le bon fonctionnement du relais 16. Lorsqu'au contraire c'est l'absence de cette surtension qui est détectée, cette absence pouvant être due par exemple à un collage de la palette 26 sur la culasse fixe 25 sous l'effet de contraintes climatiques excessives, une alarme locale, ou déportée, est mise en service afin de signaler la défectuosité de la protection.

Lorsque l'appareil est équipé d'un circuit test 33 conforme à la seconde réalisation illustrée sur la figure 2, le principe consiste à mesurer la variation de self entraînée par l'entrouverture de la palette 26. La bobine 29 du relais 16 est attaquée par une tension carrée c (figure 2a) d'une fréquence de quelques KHZ (par exemple 5KHZ). La montée en courant est régie par la self du relais 16 en position fermée (jusqu'au seuil de déclenchement). Lorsque le seuil de déclenchement est atteint, si la palette du relais est collée, la self ne varie quasiement pas et le courant (d,fig.2a) continue à monter de façon continue. Si la palette n'est pas collée, la self varie brutalement (baisse) et le courant e (figure 2a) monte suivant une pente plus raide. Cette variation brusque du courant est détectée par le circuit électronique 45 décrit précédemment par l'envoi d'une tension correspondante sur le pôle positif de l'amplificateur 42 et comparaison de cette tension avec une tension de référence V. Lorsque cette variation brusque e du courant est détectée, la lampe 43 s'allume.

On réalise donc ainsi un test du bon fonctionnement du relais de déclenchement 16 en contrôlant l'aptitude de l'armature mobile 26 du relais 16 à pouvoir se décoller de l'armature fixe 25 durant un très court instant, ceci sans engendrer de discontinuité d'alimentation, et sans qu'aucune action humaine de vérification et de réenclenchement ne soit plus nécessaire.

Un autre avantage pour les utilisateurs d'installations électriques, tient en ce que la mise en service périodique de l'élément mobile du relais, permet d'éviter les longues périodes d'inaction du déclencheur pouvant favoriser les effets de collage et réduire de ce fait la fiabilité de la protection différentielle.

On notera que l'invention pourra s'appliquer par exemple à un disjoncteur différentiel bipolaire inséré dans un réseau alternatif monophasé ayant un conducteur de phase et un conducteur de neutre.

Plus généralement, l'invention s'appliquera à tout appareil de coupure incorporant un déclencheur ou bien étant associé à un déclencheur du genre précédemment décrit.

## Revendications

1. Appareil électrique de protection différentielle, notamment un disjoncteur ou un interrupteur, comportant un déclencheur du genre comprenant un transformateur de détection d'un courant différentiel, un relais de déclenchement d'un mécanisme tel le mécanisme de coupure du disjoncteur, et un circuit test de contrôle du fonctionnement du déclencheur, ledit relais comportant une culasse fixe portant une bobine, et une palette ou analogue mobile par rapport à la culasse, le relais et le transformateur étant reliés électriquement de façon que pendant le fonctionnement normal de l'appareil, en l'absence de courant dans la bobine, la palette soit maintenue en position accolée sur la culasse fixe et que lorsqu'un courant différentiel est détecté par le noyau du transformateur, la palette actionne le mécanisme de coupure précité,
**caractérisé en ce que** le circuit test précité (33) comporte un premier moyen (34) pour engendrer une vibration de la palette (26) sans provoquer le déclenchement différentiel de l'appareil, et un second moyen (35,45) pour contrôler l'aptitude de ladite palette à se décoller de la culasse fixe (25) pendant la vibration précitée.

2. Appareil électrique selon la revendication 1, **caractérisé en ce que** ce premier moyen (34) consiste principalement en un moyen pour appliquer une tension sous forme de créneaux aux bornes (29a, 29b) de la bobine (29) du relais (16).

3. Appareil électrique selon la revendication 2, **caractérisé en ce que** l'amplitude et la largeur des créneaux sont réglés de manière à obtenir une vibration de la palette (26) sans entraîner son ouverture complète.

4. Appareil électrique selon la revendication 2 ou 3, **caractérisé en ce que** la tension appliquée est une tension carrée.

5. Appareil électrique selon l'une quelconque des revendications 1 à 4, **caractérisé en ce que** le second moyen précité (45) est un moyen pour mesurer la variation de self aux bornes (29a,29b) de la bobine (29), pendant la mise en service du premier moyen (34), une variation brutale de la self étant caractéristique du bon fonctionnement du relais (16).

6. Appareil électrique selon la revendication 5, **caractérisé en ce que** ce second moyen mesure la variation du courant dans le circuit test pendant la mise en service du premier moyen (34), une variation brusque du courant étant caractéristique du bon fonctionnement du relais (16).

7. Appareil électrique selon l'une quelconque des revendications 1 à 4, **caractérisé en ce que** ce second moyen (35) est un moyen pour détecter la présence d'une surtension aux bornes de la bobine (29) pendant la mise en service du premier moyen (34), cette surtension étant caractéristique de l'aptitude de la palette (26) à se décoller de la culasse fixe (25).

8. Appareil électrique selon l'une quelconque des revendications 5 à 7, **caractérisé en ce qu'**il comporte un troisième moyen de signalisation (36,43), local ou déporté, relié électriquement au second moyen précité (35,45) de manière à signaler une éventuelle défaillance de la protection différentielle.

9. Appareil électrique selon l'une quelconque des revendications précédentes, **caractérisé en ce que** les moyens précités (34,35,36,45,43) sont mis en service périodiquement.

10. Appareil électrique selon l'une quelconque des revendications précédentes, **caractérisé en ce que** les moyens précités (34,35,36,43,45) sont mis en service automatiquement.

11. Appareil électrique selon l'une quelconque des revendications précédentes, **caractérisé en ce que** la fréquence de mise en service des moyens précités (34,35,36,43,45) va de quelques dizaines de millisecondes à plusieurs mois.

## Claims

1. An electrical differential protection device, in particular a circuit breaker or switch, comprising a trip release of the kind comprising a differential current detection transformer, a trip relay of a mechanism such as the breaking mechanism of the circuit breaker, and a test circuit for monitoring operation of the trip release, said relay comprising a fixed yoke supporting a coil, and a blade or similar movable with respect to the yoke, the relay and transformer being electrically connected in such a way that during normal operation of the device in the absence of current in the coil, the blade is held in the position pressing on the fixed yoke, and that when a differential current is detected by the transformer core, the blade actuates the above-mentioned breaking mechanism,
**characterized in that** the above-mentioned test circuit (33) comprises a first means (34) for generating a vibration of the blade (26) without causing a differential tripping of the device, and a second means (35, 45) for monitoring the ability of said blade to come unstuck from the fixed yoke (25) during the above-mentioned vibration.

2. The electrical device according to claim 1, **characterized in that** the first means (34) consist mainly of a means for applying a voltage in the form of pulses to the terminals (29a, 29b) of the coil (29) of the relay (16).

3. The electrical device according to claim 2, **characterized in that** the amplitude and width of the voltage pulses are adjusted so as to obtain a vibration of the blade (26) without causing complete opening thereof.

4. The electrical device according to claim 2 or 3, **characterized in that** the voltage applied is a square voltage.

5. The electrical device according to any one of the claims 1 to 4, **characterized in that** the above-mentioned second means (45) is a means for measuring the inductance variation at the terminals (29a, 29b) of the coil (29) when the first means (34) are put into operation, a sharp variation of the inductance being characteristic of correct operation of the relay (16).

6. The electrical device according to claim 5, **characterized in that** the second means measure the variation of the current in the test circuit when the first means (34) are put into operation, a sharp variation of the current being characteristic of correct operation of the relay (16).

7. The electrical device according to any one of the claims 1 to 4, **characterized in that** the second means (35) are a means for detecting the presence of a voltage surge at the terminals of the coil (29) when the first means (34) are put into operation, this voltage surge being characteristic of the ability of the blade (26) to come unstuck from the fixed yoke (25).

8. The electrical device according to any one of the claims 5 to 7, **characterized in that** it comprises a third, local or remote, indicating means (36, 43), electrically connected to the above-mentioned second means (35, 45) so as to indicate a possible failure of the differential protection.

9. The electrical device according to any one of the foregoing claims, **characterized in that** the above-mentioned means (34, 35, 36, 43, 45) are put into operation periodically.

10. The electrical device according to any one of the foregoing claims, **characterized in that** the above-mentioned means (34, 35, 36, 43, 45) are put into operation automatically.

11. The electrical device according to any one of the foregoing claims, **characterized in that** the frequency at which the above-mentioned means (34, 35, 36, 43, 45) are put into operation ranges from a few tens of milliseconds to several months.

## Patentansprüche

1. Differenzstromschutz-Schaltgerät, insbesondere ein Leistungsschalter oder Schutzschalter mit einem Auslöser, der gattungsgemäß einen Stromwandler zur Erfassung eines Differenzstroms, ein Relais zur Abschaltung eines Mechanismus' wie des Abschaltmechanismus' des Leistungsschalters sowie eine Prüfschaltung zur Funktionsprüfung des Auslösers umfaßt, wobei das genannte Relais ein feststehendes Rückschlußeisen mit einer darauf montierten Spule sowie einen Anker bzw. ein analoges, in bezug zum Rückschlußeisen bewegliches Teil umfaßt und das Relais mit dem Stromwandler elektrisch so verbunden ist, daß der Anker im Normalbetrieb des Schaltgeräts bei fehlendem Stromfluß in der Spule in Auflage auf dem feststehenden Rückschlußeisen gehalten wird und daß bei Erfassung eines Differenzstroms durch den Kern des Stromwandlers der Anker den genannten Abschaltmechanismus betätigt,
**dadurch gekennzeichnet, daß** die genannte Prüfschaltung (33) ein erstes Mittel (34) umfaßt, um ein Schwingen des Ankers (26) zu bewirken, ohne daß es zu einer differenzstrombedingten Abschaltung des Schaltgeräts kommt, sowie ein zweites Mittel (35, 45) umfaßt, um die Fähigkeit des genannten Ankers zu überprüfen, sich während des genannten Schwingens vom feststehenden Rückschlußeisen (25) zu lösen.

2. Schaltgerät nach Anspruch 1, **dadurch gekennzeichnet, daß** dieses erste Mittel (34) im wesentlichen aus einem Mittel zur Beaufschlagung der Klemmen (29a, 29b) der Spule (29) des Relais (16) mit einer impulsförmigen Spannung besteht.

3. Schaltgerät nach Anspruch 2, **dadurch gekennzeichnet, daß** die Amplitude und Breite der Impulse so geregelt werden, daß ein Schwingen des Ankers (26) ohne dessen vollständiges Abheben bewirkt wird.

4. Schaltgerät nach Anspruch 2 oder 3, **dadurch gekennzeichnet, daß** die angelegte Spannung eine Rechteckspannung ist.

5. Schaltgerät nach irgendeinem der Ansprüche 1 bis 4, **dadurch gekennzeichnet, daß** das genannte zweite Mittel (45) als Mittel ausgebildet ist, um während der Einschaltung des ersten Mittels (34) die Änderung der Induktivität an den Klemmen (29a, 29b) der Spule (29) zu messen, wobei eine schlagartige Änderung der Induktivität ein fehlerfreies Arbeiten des Relais (16) anzeigt.

6. Schaltgerät nach Anspruch 5, **dadurch gekennzeichnet, daß** dieses zweite Mittel die Änderung des Stroms in der Prüfschaltung während der Einschaltung des ersten Mittels (34) mißt, wobei eine schlagartige Änderung des Stroms ein fehlerfreies Arbeiten des Relais (16) anzeigt.

7. Schaltgerät nach irgendeinem der, Ansprüche 1 bis 4, **dadurch gekennzeichnet, daß** das zweite Mittel (35) als Mittel ausgebildet ist, um während der Einschaltung des ersten Mittels (34) das Anstehen einer Überspannung an den Klemmen der Spule (29) zu erfassen, wobei diese Überspannung die Fähigkeit des Ankers (26) anzeigt, sich vom feststehenden Rückschlußeisen (25) zu lösen.

8. Schaltgerät nach irgendeinem der Ansprüche 5 bis 7, **dadurch gekennzeichnet, daß** es ein drittes Lokal- oder Fernanzeigemittel (36, 43) umfaßt, welches mit dem genannten zweiten Mittel (35, 45) elektrisch so verbunden ist, daß eine gegebenenfalls vorliegende Fehlfunktion des Differenzstromschutzes angezeigt wird.

9. Schaltgerät nach irgendeinem der vorhergehenden Ansprüche, **dadurch gekennzeichnet, daß** die genannten Mittel (34, 35, 36, 45, 43) periodisch eingeschaltet werden.

10. Schaltgerät nach irgendeinem der vorhergehenden Ansprüche, **dadurch gekennzeichnet, daß** die genannten Mittel (34, 35, 36, 43, 45) automatisch eingeschaltet werden.

11. Schaltgerät nach irgendeinem der vorhergehenden Ansprüche, **dadurch gekennzeichnet, daß** die Einschalthäufigkeit der genannten Mittel (34, 35, 36, 43, 45) zwischen einigen hundertstel Sekunden und mehreren Monaten betragen kann.
